# EUROPÄISCHE PATENTSCHRIFT

(11) **EP 0 432 632 B1**
(45) Veröffentlichungstag und Bekanntmachung des Hinweises auf die Patenterteilung: **06.10.1993**
(21) Anmeldenummer: 90123388.2
(22) Anmeldetag: 06.12.1990
(51) Int. Cl.: A01F 7/06

(54) **Erntemaschine, insbesondere selbstfahrender Mähdrescher**
Harvesting machine, especially a self-propelled combine harvester
Moisonneuse, en particulier moissonneuse-batteuse automotrice

(30) Priorität: 15.12.1989 US 451284
(43) Veröffentlichungstag der Anmeldung: 19.06.1991
(73) Patentinhaber: DEERE & COMPANY, Moline, Illinois 61265 (US)
(72) Erfinder: Coers, Bruce Alan, Hillsdale, Illinois 61257 (US)
(74) Vertreter: Feldmann, Bernhard

(56) Entgegenhaltungen:
- EP-A- 0 173 224
- EP-A- 0 224 803
- US-A- 3 470 881
- US-A- 4 489 733
- US-A- 4 733 672
- US-A- 4 739 773

## Beschreibung

Die Erfindung betrifft eine Erntemaschine, insbesondere selbstfahrender Mähdrescher, mit einem Gehäuse und einer sich längs innerhalb des Gehäuses erstreckenden, insbesondere nach dem Axialfluß-Prinzip arbeitenden und wenigstens einen Rotor und ein Gehäuse enthaltenden Erntegutbearbeitungsvorrichtung.

Es ist eine Erntemaschine, nämlich ein Mähdrescher bekannt (US-A-4,733,672), der eine sich quer zur Fahrtrichtung erstreckende Drescheinheit und eine sich in der Fahrtrichtung erstreckende und nach dem Axialflußprinzip arbeitende Abscheideeinheit enthält. Die Abscheideeinheit ist im wesentlichen zu allen Seiten von den Wänden eines Gehäuses umgeben und setzt sich hauptsächlich aus einem Rotor und einem diesen umgebenden Korb zusammen. Während der Korb starr an Wänden des Gehäuses befestigt ist, greift der Rotor über leicht demontierbare Lager an einer mit den Wänden verbundenen Strebe an.

Diese Erntemaschine ist insofern nachteilig, als nur für den Rotor eine einfache Demontage möglich ist; der Korb muß in zeitaufwendiger Arbeit und unter eingeengten Bedingungen in dem Gehäuse abgebaut, das Gehäuse zur Verwendung eines Krans, eines Hubstaplers oder dergleichen teilweise entfernt und der Korb über Seile oder dergleichen an dem Hubzeug zum Herausheben aus dem Gehäuse angehängt werden.

Die US-A-3,470,881 offenbart einen Mähdrescher mit einer Axialdresch- und Trenneinheit mit einem Rotor und einem Dreschkorb, der sich über einen axialen Teilbereich des Rotors erstreckt. Während die Axialdresch- und Trenneinheit an sich in dem Rahmen des Mähdreschers starr gelagert ist, kann der Dreschkorb auf Stangen in eine Wartungsstellung gebracht werden, in der er aus dem Rahmen herausragt.

Die einfachen Wartung der gesamten Axialdresch- und Trenneinheit wird durch den beweglichen Dreschkorb nicht erzielt.

Die der Erfindung zugrunde liegende Aufgabe wird darin gesehen, eine Erntemaschine mit einem Gehäuse und einer Erntegutbearbeitungsvorrichtung so auszubilden, daß letztere auf schnelle und einfache Weise für Wartungs- und evtl. Reparaturzwecke aus dem Gehäuse entfernt werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist die Erntegutbearbeitungsvorrichtung nicht dauerhaft starr, sondern von vornherein beweglich gelagert und kann mittels einer Öffnung in wenigstens einer der Wände soweit herausgezogen werden, bis sie entweder soweit zugänglich ist, daß sie im Gehäuse gewartet, oder von einem Hubgerät erfaßt und in eine Werkstatt gebracht werden kann. Es sind Vorkehrungen getroffen, die Erntegutbearbeitungsvorrichtung in einer Richtung zu bewegen; diese Vorkehrungen können durch schwenkbare Lenker, durch die Lagerung auf einem Hydraulikzylinder, durch Führungsschienen oder dergleichen verwirklicht werden.

Die Öffnung kann sich in der betreffenden Wand oder Wänden an jeder Stelle befinden, an der die Erntegutbearbeitungs-Vorrichtung aus dem Gehäuse herausgezogen werden kann, die also von außen leicht zugänglich ist. Bei einem Mähdrescher wird sich die Öffnung vorteilhafterweise in der rückwärtigen Wand befinden. Es ist bei entsprechendem Aufbau des Mähdreschers aber auch möglich, diese Öffnung im vorderen Bereich des Gehäuses anzuordnen und die Erntegutbearbeitungsvorrichtung nach vorne herauszufahren.

Bei einer anderen Art von Erntemaschinen, z. B. einem Feldhäcksler, könnten das Förder- und/oder Häckselaggregat ebenfalls zwischen den Rädern zu der Vorder- oder der Rückseite des Gehäuses hinausgeschoben werden.

Eine einfache Art, die Erntegutbearbeitungsvorrichtung beweglich in dem Gehäuse zu lagern, wird durch die Verwendung von Führungsschienen geboten, die sich parallel zu der Verschieberichtung und nahe an der Erntegutbearbeitungsvorrichtung befinden. Solche Führungsschienen können durch eine Profilierung der betreffenden Wände des Gehäuses gebildet werden oder aus einem separaten und an die Wände angeschraubten Halbzeugprofil bestehen. Separat ausgebildete Halbzeugprofile hätten zudem den Vorteil, daß sie an den Wänden beweglich angebracht und sogar während der Bewegung der Erntegutbearbeitungsvorrichtung so verstellt werden könnten, daß sie die Bewegung der Erntegutbearbeitungsvorrichtung unterstützen und erleichtern.

Der Bewegungswiderstand wird gering gehalten, wenn die Erntegutbearbeitungsvorrichtung auf Rädern auf den Führungsschienen gerollt werden kann. Dennoch ist es grundsätzlich möglich, die Erntegutbearbeitungsvorrichtung gleitend, möglicherweise unter Verwendung von Schmiermitteln, über die Führungsschienen zu ziehen. Zur Geräuschdämmung kann es angebracht sein, die Räder aus Vollgummi oder Hartkunststoff herzustellen.

Wenn auch die Erntegutbearbeitungsvorrichtung von Hand über die Führungsschienen gezogen werden könnte, ist es insbesondere bei sehr schweren Erntegutbearbeitungsvorrichtungen von Vorteil, wenigstens eines der Räder antreibbar auszugestalten und die Erntegutbearbeitungsvorrichtung so zusammenwirkend mit der betreffenden Führungsschiene aus dem Gehäuse herauszufahren. Die Antriebskraft kann durch Muskelkraft oder über einen Hydraulik-, Pneumatik- oder Elektromotor aufgebracht werden. Wird der Antrieb durch Muskelkraft eingeleitet, ist ein untersetzendes Getriebe vor dem anzutreibenden Rad sinnvoll, um den Kraftbedarf geringst möglich zu halten. Bei einem Fremdkraftmotor kann die Öl-, Luft- oder Stromzufuhr von einer nahegelegenen und geeigneten Stelle aus gesteuert werden; auch in diesem Fall ist ein vorgeschaltetes Getriebe sinnvoll, weil dann der Motor entsprechend klein gehalten werden kann. Als Getriebe bietet sich vor allem ein Schneckenradgetriebe an, da es eine hohe Untersetzung erbringt und zugleich den Kraftfluß umleiten kann.

Die Übertragung der Kraft von dem angetriebenen Rad auf die Führungsschiene kann über eine Zahnverbindung an einem Zahnrad und einer Zahnstange erfolgen, oder mittels Reibrädern durchgeführt werden. Anstatt des Zahnrads und der Zahnstange eignen sich auch ein Rad und eine Führungsschiene mit entsprechend zusammenpassender Außenprofilierung.

Außer dem angetriebenen Rad können weitere Räder vorgesehen werden, die die Erntegutbearbeitungsvorrichtung auf den Führungsschienen führen und den Rollwiderstand herabsetzen. Gegen eine Entgleisung aus den Führungsschienen kann die Erntegutbearbeitungsvorrichtung mittels Führungsstiften und Rädern gesichert werden.

Wird die Kraft zum Bewegen der Erntegutbearbeitungsvorrichtung von Menschenhand aufgebracht, kann sie durch eine Kurbel eingeleitet werden, die ebenfalls eine Untersetzung bewirkt.

Eine andere Art der Bewegung der Erntegutbearbeitungsvorrichtung besteht darin, sie lediglich auf den Führungsschienen beweglich zu lagern und mittels einer Winde, z. B. einer mechanischen Seilwinde oder einer hydraulischen aus Hydraulikkolben und Hydraulikzylinder bestehenden Winde, zu verschieben.

Um die Erntegutbearbeitungsvorrichtung stets in der für den Erntegutfluß richtigen Stellung zu halten, sind aus Haltern und Anschlägen bestehende Sicherungsmittel vorgesehen, die die Erntegutbearbeitungsvorrichtung in beiden Richtungen festhalten. Eine einfache Art besteht aus einem Bolzen, z. B. einer Schraube, mit der die Erntegutbearbeitungsvorrichtung an den Führungsschienen an wenigen Stellen angeschraubt wird. Es können aber ebenso Anschläge eingesteckt oder angeschraubt werden, die in die Bewegungsbahn der Erntegutbearbeitungsvorrichtung hineinragen.

Der Ausbau der Erntegutbearbeitungsvorrichtung kann besonders schnell erfolgen, wenn sie bereits mit einer Anschlußvorrichtung versehen ist, mittels deren sie mit einem Hubzeug unmittelbar verbunden werden kann. Auf diese Weise kann die Erntegutbearbeitungsvorrichtung, unmittelbar nachdem sie soweit aus dem Gehäuse herausbewegt worden ist, daß die Anschlußvorrichtung frei wird, von einem Kran oder einem Hubstapler erfaßt, angehoben und an der gewünschten Stelle abgesetzt werden.

Die Anordnung der Anschlußvorrichtung an der Erntegutbearbeitungsvorrichtung an dem rückwärtigen Ende, d. h. in der unmittelbaren Nähe der Öffnung in der Wand, bietet die Möglichkeit, das Hubzeug zu dem frühestmöglichen Zeitpunkt mit der Erntegutbearbeitungsvorrichtung zu verbinden, so daß die weitere Bewegung mittels des Hubzeugs vollzogen werden kann. Befindet sich an der Anschlußvorrichtung ein sich quer erstreckender Haltebolzen, braucht das Hubzeug nur mit einem entsprechenden Haken oder einer entsprechenden Öse versehen zu sein, in der der Haltebolzen aufgenommen wird.

In der Zeichnung ist ein nachfolgend näher beschriebenes Ausführungsbeispiel der Erfindung dargestellt. Es zeigt:
- Fig. 1: eine Erntemaschine mit einer Erntegutbearbeitungsvorrichtung in offener, schematischer Darstellung und in Seitenansicht,
- Fig. 2: die Erntegutbearbeitungsvorrichtung mit einer Anschlußvorrichtung in einer Lage in einer perspektivischen Seitenansicht,
- Fig. 3: die Erntegutbearbeitungsvorrichtung in einer anderen Lage in Seitenansicht,
- Fig. 4: die Anschlußvorrichtung in Seitenansicht,
- Fig. 5: die Anschlußvorrichtung in Vorderansicht und
- Fig. 6: einen Schnitt durch die Erntegutbearbeitungsvorrichtung quer zu ihrer Längsachse und im Bereich von Sicherungsmitteln.

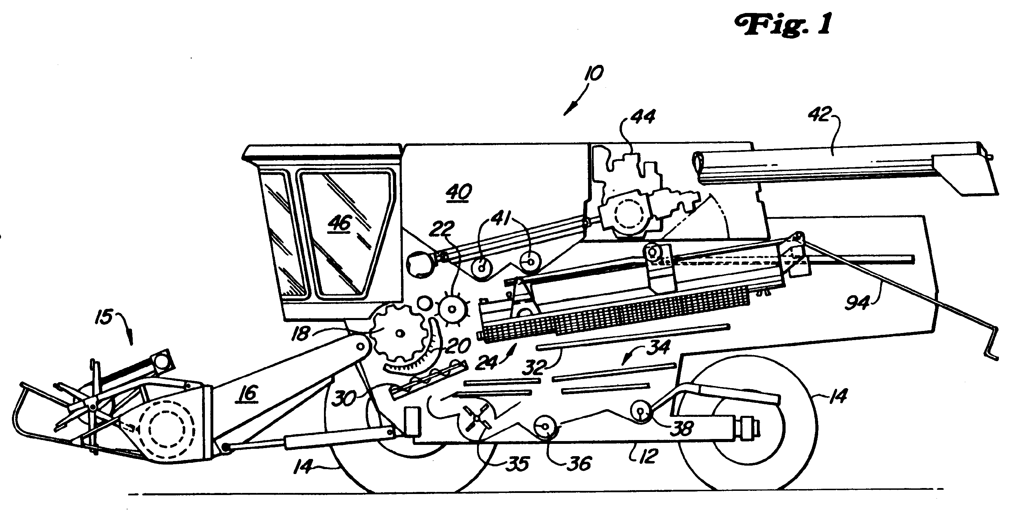

Eine in Figur 1 gezeigt selbstfahrende Erntemaschine 10 in der Art eines Mähdreschers weist ein Gehäuse 12 auf, das sich mittels Rädern 14 auf dem Boden abstützt. Wenigstens zwei dieser Räder 14 werden über ein nicht gezeigtes Getriebe angetrieben, um die Erntemaschine 10 über ein Feld zu bewegen. An den vorderen Bereich der Erntemaschine 10 ist eine Erntebergungseinrichtung 15 in der Art eines Schneidwerks angeschlossen, um auf dem Feld stehendes Erntegut aufzunehmen und es durch ein Fördergehäuse 16 zuerst einer Dreschtrommel 18 und einem Dreschkorb 20 zuzuführen. Die Dreschtrommel 18 bildet mit dem Dreschkorb 20 eine Drescheinheit, die sich innerhalb des Gehäuses 12 quer zur Fahrtrichtung der Erntemaschine 10 erstreckt. Anschließend wird das gedroschene Erntegut einer Wendetrommel 22 aufgegeben, die es einer nach dem Axialflußprinzip arbeitenden Erntegutbearbeitungsvorrichtung 24 zuführt. Die Erntegutbearbeitungsvorrichtung 24 ist ausführlicher in der US-A-4,739,773 beschrieben, auf die hiermit ausdrücklich Bezug genommen wird und deren Offenbarung in diese Patentanmeldung mit einbezogen sein soll.

Getreide und Kurzstroh, die von der Dreschtrommel 18 ausgedroschen werden, fallen auf Schnecken 30 und solches, das von der Erntegutbearbeitungsvorrichtung 24 abgeschieden wird, fällt auf den Schüttelboden 32, von wo aus sie jeweils einem Siebkasten 34 aufgegeben werden. Dem Siebkasten 34 ist ein Reinigungsgebläse 35 zugeordnet, das die Absonderung des Kurzstrohs von dem Getreide unterstützt. Das gereinigte Getreide wird mittels einer Körnerschnecke 36 einem nicht gezeigten Elevator aufgegeben, der es in einen Korntank 40 fördert. Nicht vollkommen ausgedroschenes Getreide, Ährenstücke und grobe Verunreinigungen werden von einer Überkehrschnecke 38 über einen ebenfalls nicht gezeigten Elevator wieder der Dreschtrommel 18 für einen weiteren Abscheidungsprozeß zugeführt. Das gereinigte Getreide wird aus dem Korntank 40 mittels eines aus Querschnecken 41 und einer Entleerschnecke 42 bestehenden Entleersystems entladen. Die verschiedenen vorgenannten Komponenten werden sämtlich von einer Verbrennungskraftmaschine 44 angetrieben, die von einem sich in einer Fahrerkabine 46 befindlichen Fahrer bedient wird.

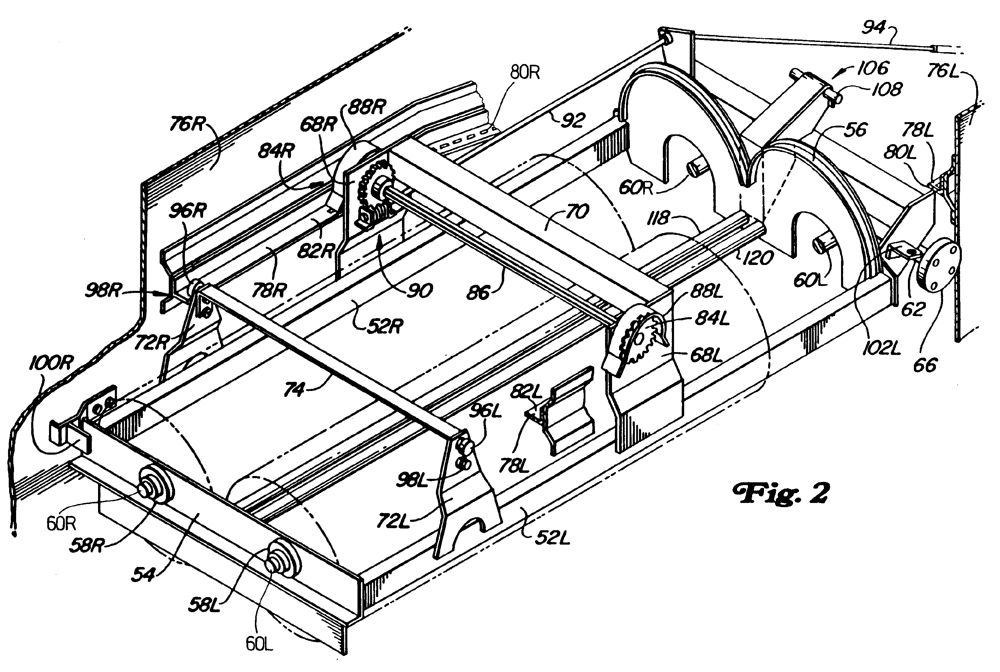

Mit Blick auf Figur 2 ist zu erkennen, daß die Erntegutbearbeitungsvorrichtung 24 mit linken und rechten Rahmenteilen 52 L und 52 R versehen ist, die an ihren vorderen Enden mit einer Frontplatte 54 und an ihren rückwärtigen Enden mit einer Endplatte 56 verschweißt sind. Die Frontplatte 54 ist mit Lagern 58 L und 58 R ausgerüstet, um Rotorwellen 60 L und 60 R von nur angedeuteten Abscheiderotoren drehbar aufzunehmen. Die Rotorwellen 60 L und 60 R werden über eine Querwelle 62 angetrieben, an der eine Antriebsscheibe 66 befestigt ist, wobei die Krafteinleitung über nicht gezeigte Winkelgetriebe erfolgt.

Die Erntegutbearbeitungsvorrichtung 24 ist ferner mit aufgehenden linken und rechten Platten 68 L und 68 R versehen, die an die Rahmenteile 52 L und 52 R in deren mittleren Bereich angeschweißt sind. Zwischen den Platten 68 L und 68 R ist eine rohrförmige und sich oberhalb der Erntegutbearbeitungsvorrichtung 24 erstreckende Traverse 70 eingeschweißt. Ein zweiter Satz linker und rechter aufgehender Platten 72 L und 72 R ist im vorderen Bereich der Rahmenteile 52 L bzw. 52 R an diese angeschweißt. Auch zwischen diesen beiden Platten 72 L und 72 R erstreckt sich oberhalb der Erntegutbearbeitungsvorrichtung 24 eine Traverse 74.

Die Erntegutbearbeitungsvorrichtung 24 befindet sich zwischen seitlichen Wänden 76 L und 76 R des Gehäuses 12 der Erntemaschine 10. Eine sich längs erstreckende Führung ist an der Innenseite jeder seitlichen Wand 76 L und 76 R angeschweißt und enthält erste und zweite sich längs der Erntegutbearbeitungsvorrichtung 24 und parallel zu dieser erstreckende Führungsschienen 78 L und 78 R. Wie aus Figur 1 hervorgeht, sind die Führungsschienen 78 L und 78 R in ihrem Mittenbereich gebogen, um sich der nach unten geneigt verlaufenden Art der Erntegutbearbeitungsvorrichtung 24 anzupassen. Die Führungsschienen 78 L und 78 R weisen jeweils einen Formschlußabschnitt 80 L und 80 R auf, in den in diesem Ausführungsbeispiel quadratische Öffnungen eingearbeitet sind. Die Formschlußabschnitte 80 L und 80 R der Führungsschienen 78 L und 78 R verlaufen mit ihrer Längsmittenachse im wesentlichen horizontal und somit parallel zu der Aufstandsfläche der Erntemaschine 10. Die Führungsschienen 78 L und 78 R sind zudem mit festen Abschnitten 82 L und 82 R versehen, die sich von den horizontal verlaufenden Formschlußabschnitten 80 L und 80 R nach vorne und nach unten erstrecken.

Erste und zweite Räder 84 L und 84 R sind über eine Sechskantwelle 86 miteinander drehfest verbunden und über diese in den Platten 68 L und 68 R drehbar gelagert. Diese ersten und zweiten Räder 84 L und 84 R tragen an ihrem Umfang nicht näher bezeichnete sich radial erstreckende Vorsprünge, die in die Öffnungen in dem Formschlußabschnitt 80 L bzw. 80 R der Führungsschienen 78 L bzw. 78 R eingreifen und mit diesen eine formschlüssige Verbindung herstellen. Die Räder 84 L und 84 R sind gegen Schmutz, wie Spreu, Kurzstroh, Sand und dergleichen durch Schutzschilder 88 L bzw. 88 R geschützt.

Ein Getriebe 90 in der Art eines Schneckengetriebes wird dazu benutzt, die Sechskantwelle 86 mit den darauf befindlichen ersten und zweiten Rädern 84 L und 84 R anzutreiben. An das Getriebe 90 schließt eingangsseitig eine Antriebswelle 92 an, die sich zu dem rückwärtigen Bereich der Erntegutbearbeitungsvorrichtung 24 erstreckt. Das Ende der Antriebswelle 92 ist mit einer Kupplungsvorrichtung 93 versehen, an die eine manuell zu bedienende Kurbel 94 schnell angeschlossen werden kann. Eine derartige Kupplungsvorrichtung 93 kann wie solche an Wagenhebern für Kraftfahrzeuge ausgebildet sein. Jemand, der die Kurbel 94 dreht, treibt über die Antriebswelle 92 das Getriebe 90 an. Das Getriebe 90 wiederum versetzt die Sechskantwelle 86 und die ersten und zweiten Räder 84 L und 84 R in Drehung. Da die sich radial erstreckenden Vorsprünge der Räder 84 L und 84 R in die Öffnungen in dem Formschlußabschnitt 80 L bzw. 80 R eingreifen, wird bei einer Drehbewegung der Räder 84 L und 84 die Erntegutbearbeitungsvorrichtung 24 innerhalb des Gehäuses 12 der Erntemaschine 10 längs bewegt.

Die aufgehenden Platten 72 L und 72 R sind mit ersten und zweiten der Führung der Erntegutbearbeitungsvorrichtung 24 dienenden Rädern 96 L und 96 R bestückt, die auf der Oberseite der Führungsschienen 78 L und 78 R abrollen. Gleichzeitig erstrecken sich erste und zweite Führungsstifte 98 L und 98 R unmittelbar unterhalb der Räder 96 L und 96 R. Die Räder 96 L und 96 R sowie die Führungsstifte 98 L und 98 R werden dazu benutzt, die Erntegutbearbeitungsvorrichtung 24 in das Gehäuse 12 der Erntemaschine 10 hinein oder aus dieser heraus axial sicher zu führen.

Wenn die Erntegutbearbeitungsvorrichtung 24 innerhalb des Gehäuses 12 in der Betriebsstellung verharrt, schlägt die Frontplatte 54 an einen Anschlag 100 R an, der an der seitlichen Wand 76 R befestigt ist. Ein weiterer Anschlag ist an der linken seitlichen Wand 76 L angebracht, aber in der Zeichnung nicht dargestellt.

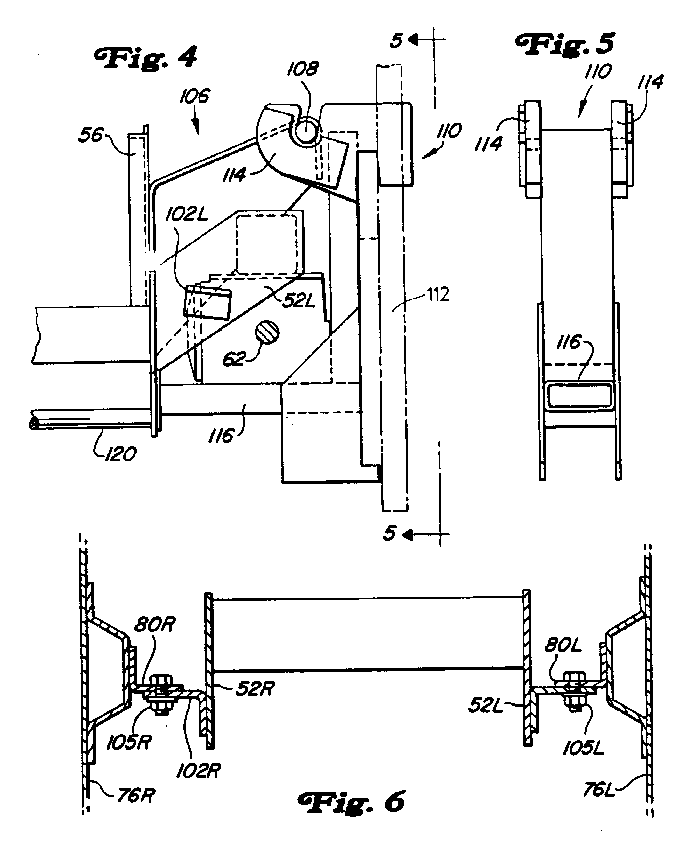

Der rückwärtige Bereich der Erntegutbearbeitungsvorrichtung 24 wird von abgekröpften Haltern 102 L und 102 R an Ort und Stelle gehalten, in die Öffnungen eingearbeitet sind, die mit einer der Öffnungen in dem Formschlußabschnitt 80 L bzw. 80 R der betreffenden Führungsschiene 78 L bzw. 78 R fluchten. Diese Ausführung der Befestigungsart geht am besten aus Figur 6 hervor. Danach sind die Halter 102 R und 102 L an die Führungsschienen 78 L und 78 R mittels Schrauben 105 R und 105 L angeschraubt, die die Erntegutbearbeitungsvorrichtung 24 in ihrem rückwärtigen Bereich örtlich festlegen und festhalten. In Figur 2 ist der Halter 102 L so dargestellt, als wäre er von dem Formschlußabschnitt 80 L getrennt. Dieser räumliche Bezug besteht bei einer vollkommen eingeschobenen Erntegutbearbeitungsvorrichtung 24 nicht, weil diese mit ihrem vorderen Endbereich der nach unten gerichteten Neigung der Führungsschienen 78 L und 78 R im vorderen, glatten Abschnitt folgt und dann der Halter 102 L von unten her an den Formschlußabschnitt 80 L anschlägt und an diesen angeschraubt werden kann. Aus Gründen der Übersicht und der Darstellung einer räumlichen Beziehung während des Ausfahrens der Erntegutbearbeitungsvorrichtung 24 ist jedoch in Figur 2 die vorbeschriebene Lage des Halters 102 L von dem Formschlußabschnitt 80 L getrennt wiedergegeben worden.

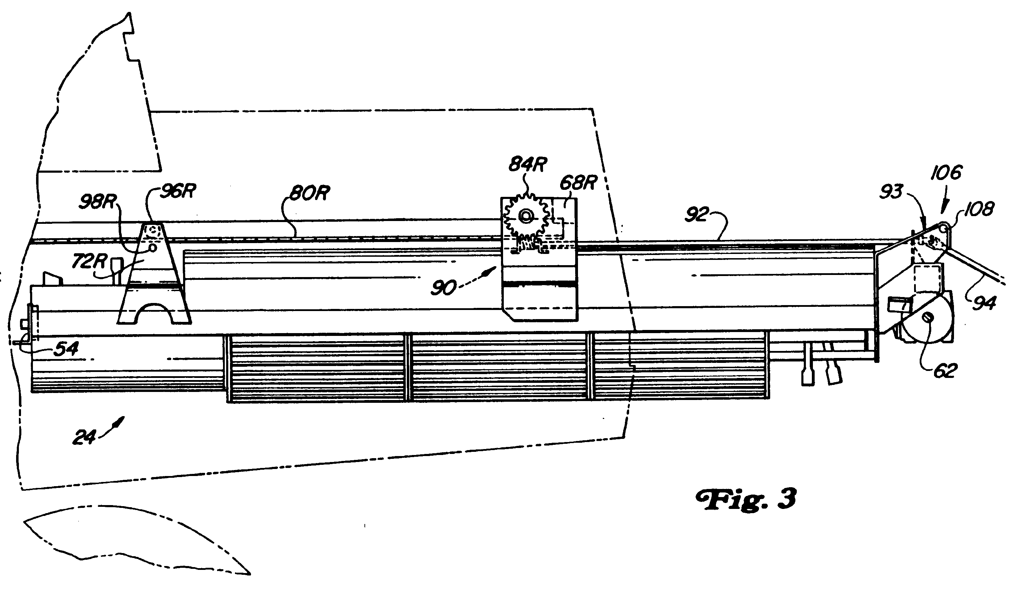

Figur 3 stellt die Erntegutbearbeitungsvorrichtung 24 teilweise aus dem rückwärtigen Bereich der Erntemaschine 10 herausgezogen dar. Dies ist die Stellung, in der die ersten und zweiten Räder 84 L und 84 R die Enden der Formschlußabschnitte 80 L und 80 R erreichen, und dies ist auch die Stellung, in der die Erntegutbearbeitungsvorrichtung 24 von einer anderen Maschine, nämlich einem Hubzeug, wie einem Gabelstapler, angehoben und aus der Erntemaschine 10 entfernt werden kann. Hierfür ist die Erntegutbearbeitungsvorrichtung 24 mit einer Anschlußvorrichtung 106 versehen, die einen Haltebolzen 108 enthält, an den das Hubzeug anschließen kann. Eine derartige Anschlußvorrichtung 106 ist in den Figuren 4 und 5 dargestellt und enthält einen Rahmen 110, der mit einer Hubgabel 112 oder einem Hubmast verbunden werden kann. Der Rahmen 110 ist zudem mit einem Haken 114 versehen, in dem der Haltebolzen 108 Aufnahme findet, und mit einem rohrförmigen Gegenlager 116, das die aus dem Kippmoment entstehende Kraft in den Bodenbereich der Erntegutbearbeitungsvorrichtung 24 längs einleitet. Diese längs eingeleitete axiale Kraft kann mittels Axialstreben 118 und 120 längs durch die Erntegutbearbeitungsvorrichtung 24 übertragen werden.

## Patentansprüche

1. Erntemaschine (10), insbesondere selbstfahrender Mähdrescher, mit einem Gehäuse (12) und einer sich längs innerhalb des Gehäuses (12) erstreckenden, wenigstens einen Rotor und ein Rotorgehäuse enthaltenden Erntegutbearbeitungsvorrichtung (24) die insbesondere nach dem Axialfluß-Prinzip arbeitet, dadurch gekennzeichnet, daß die Erntegutbearbeitungsvorrichtung (24) innerhalb des Gehäuses (12) als eine demontierbare und den Rotor und das Rotorgehäuse enthaltende Einheit ausgebildet und beweglich gelagert ist und wenigstens eine Wand des Gehäuses (12) eine Öffnung darbietet, der diese Einheit zur Entfernung aus dem Gehäuse (12) über Führungsmittel (78L, 78R) zuführbar ist.

2. Erntemaschine nach Anspruch 1, dadurch gekennzeichnet, daß die Erntegutbearbeitungsvorrichtung (24) auf Führungsschienen (78 L, 78 R) gelagert ist, die sich nahe der Erntegutbearbeitungsvorrichtung (24) und parallel zu deren Bewegungsrichtung erstrecken.

3. Erntemaschine nach Anspruch 2, dadurch gekennzeichnet, daß die Erntegutbearbeitungsvorrichtung (24) mittels Rädern (84 L, 84 R, 96 L, 96 R) auf den Führungsschienen (78 L, 78 R) gelagert ist.

4. Erntemaschine nach Anspruch 3, dadurch gekennzeichnet, daß wenigstens ein Rad (84 L, 84 R) reib- oder formschlüssig an wenigstens einer Führungsschiene (78 L, 78 R) angreift und antreibbar ist, wozu insbesondere das Rad (84 L, 84 R) als Zahnrad ausgebildet ist, und die Führungsschiene (78 L, 78 R) mindestens einen Formschlußabschnitt (80 L, 80 R) aufweist, der eine Zahnschiene oder eine Schiene mit Vertiefungen oder Öffnungen darstellt.

5. Erntemaschine nach Anspruch 2 oder 3, dadurch gekennzeichnet, daß außer dem formschlüssig an der Führungsschiene (78 L, 78 R) angreifenden Rad (84 L, 84 R) mindestens ein weiteres Rad (96 L, 96 R) zur Führung und/oder ein Führungsstift (98 L, 98 R) vorgesehen sind.

6. Erntemaschine nach Anspruch 4, dadurch gekennzeichnet, daß das Rad (84 L, 84 R) über einen Hydraulik-Pneumatik-oder Elektromotor antreibbar ist.

7. Erntemaschine nach Anspruch 4, 5 oder 6, dadurch gekennzeichnet, daß das Rad (84 L, 84 R) über ein mechanisches Getriebe (90) antreibbar ist.

8. Erntemaschine nach Anspruch 7, dadurch gekennzeichnet, daß das mechanische Getriebe (90) mittels einer Kurbel (94), insbesondere einer Handkurbel, antreibbar ist.

9. Erntemaschine nach Anspruch 2 oder 3, dadurch gekennzeichnet, daß die Erntegutbearbeitungsvorrichtung (24) mittels einer Winde, insbesondere einer Seilwinde, bewegbar ist.

10. Erntemaschine nach einem oder mehreren der vorherigen Ansprüche, dadurch gekennzeichnet, daß die Erntegutbearbeitungsvorrichtung (24) mittels Anschlägen (100 R, 100 L) und/oder Haltern (102 L, 102 R) an dem Gehäuse (12) oder den Führungsschienen (78 L, 78 R) festlegbar ist.

11. Erntemaschine nach Anspruch 10, dadurch gekennzeichnet, daß die Halter (102 L, 102 R) eine Schraube (105 L, 105 R) enthalten, die in Öffnungen in der Führungsschiene (78 L, 78 R) und der Erntegutbearbeitungsvorrichtung (24) einsetzbar ist.

12. Erntemaschine nach einem oder mehreren der vorherigen Ansprüche, dadurch gekennzeichnet, daß an der Erntegutbearbeitungsvorrichtung (24) eine Anschlußvorrichtung (106) für ein Hubgerät vorgesehen ist.

13. Erntemaschine nach Anspruch 12, dadurch gekennzeichnet, daß sich die Anschlußvorrichtung (106) am rückwärtigen Ende der Erntegutbearbeitungsvorrichtung (24) befindet und einen sich quer erstreckenden Haltebolzen (108) aufweist.

## Claims

1. A harvesting machine (10), especially a self-propelled combine harvester, with a housing (12) and a processing device (24) for harvested material extending longitudinally within the housing (12), including at least one rotor and a rotor housing and in particular operating in accordance with the axial flow principle, characterized in that the processing device (24) for harvested material is formed within the housing (12) as a de-mountable unit containing the rotor and the rotor housing and is movably mounted, and at least one wall of the housing (12) provides an opening to which this unit can be fed on guide means (78L, 78R) for removal from the housing (12).

2. A harvesting machine according to claim 1, characterized in that the processing device (24) for harvested material is mounted on guide rails (78L, 78R) which extend close to the processing device (24) for harvested material and parallel to its direction of movement.

3. A harvesting machine according to claim 2, characterized in that the processing device (24) for harvested material is mounted on the guide rails (78L, 78R) by means of wheels (84L, 84R, 96L, 96R).

4. A harvesting machine according to claim 3, characterized in that at least one wheel (84L, 84R) engages frictionally or in interlocking manner on at least one guide rail (78L, 78R) and is drivable, for which in particular the wheel (84L, 84R) is formed as a toothed wheel, and guide rail (78L, 78R) has at least one positively engaging section (80L, 80R) in the nature of a rack or a rail with depressions or apertures.

5. A harvesting machine according to claim 2 or 3, characterized in that, in addition to the wheel (84L, 84R) engaging in interlocking manner on the guide rail (78L, 78R), there is provided at least one further wheel (96L, 96R) for guiding and/or a guide pin (98L, 98R).

6. A harvesting machine according to claim 4, characterized in that the wheel (84L, 84R) is drivable by a hydraulic pneumatic or electric motor.

7. A harvesting machine according to claim 4, 5 or 6, characterized in the wheel (84L, 84R) can be driven through a mechanical gear (90).

8. A harvesting machine according to claim 7, characterized in that the mechanical gear (90) can be driven by means of a crank (94), especially a hand crank.

9. A harvesting machine according to claim 2 or 3, characterized in that the processing device (24) for harvested material is movable by means of a winch, especially a cable winch.

10. A harvesting machine according to one or more of the preceding claims, characterized in that the processing device (24) for harvested material can be fixed to the housing (12) or the guide rails (78L, 78R) by means of stops (100R, 100L) and/or brackets (102L, 102R).

11. A harvesting machine according to claim 10, characterized in that the brackets (102L, 102R) each have a screw (105L, 105R) which can be inserted in openings in the guide rail (78L, 78R) and the processing device (24) for harvested material.

12. A harvesting machine according to one or more of the preceding claims, characterized in that a coupling device (106) for a lift device is provided on the processing device (24) for harvested material.

13. A harvesting machine according to claim 12, characterized in that the coupling device (106) is located at the rear end of the processing device (24) for harvested material and comprises a transversely extending supporting pin (108).

## Revendications

1. Récolteuse (10), notamment moissonneuse-batteuse automotrice, comportant un carter (12) et un dispositif de traitement du produit récolté (24), s'étendant longitudinalement à l'intérieur du carter (12), travaillant notamment selon le principe d'écoulement axial et contenant au moins un rotor et un carter de rotor, **caractérisée** en ce que le dispositif de traitement du produit récolté (24) est conçu comme unité démontable contenant le rotor et le carter de rotor et est monté à déplacement à l'intérieur du carter (12), et au moins une paroi du carter (12) présente une ouverture à laquelle cette unité peut être amenée sur des moyens de guidage (78 L, 78 R), afin de la sortir du carter (12).

2. Récolteuse selon la revendication 1, **caractérisée** en ce que le dispositif de traitement du produit recolté (24) est monté sur des glissières (78 L, 78 R), qui s'étendent à proximité du dispositif de traitement du produit récolté (24) et parallèlement à sa direction de déplacement.

3. Récolteuse selon la revendication 2, **caractérisée** en ce que le dispositif de traitement du produit récolté (24) est monté par des roues (84 L, 84 R, 96 L, 96 R) sur les glissières (78 L, 78 R).

4. Récolteuse selon la revendication 3, **caractérisée** en ce qu'au moins une roue (84 L, 84 R) attaque par adhérence ou engagement positif au moins une glissière (78 L, 78 R) et peut être entraînée, la roue (84 L, 84 R) étant notamment configurée à cet effet en roue dentée et la glissière (78 L, 78 R) présentant au moins un tronçon d'engagement positif, qui constitue une crémaillère ou une glissière dotée de renfoncements ou d'ouvertures.

5. Récolteuse selon la revendication 2 ou 3, **caractérisée** en ce qu'en plus de la roue (84 L, 84 R) attaquant par engagement positif la glissière (78 L, 78 R), au moins une autre roue (96 L, 96 R) et/ou un tenon de guidage (98 L, 98 R) sont prévus pour le guidage.

6. Récolteuse selon la revendication 4, **caractérisée** en ce que la roue (84 L, 84 R) peut être entraînée au moyen d'un moteur hydraulique, pneumatique ou électrique.

7. Récolteuse selon l'une quelconque des revendications 4, ou 6, **caractérisée** en ce que la roue (84 L, 84 R) peut.être entraînée par l'intermédiaire d'une transmission mécanique (90).

8. Récolteuse selon la revendication 7, **caractérisée** en ce que la transmission mécanique (90) peut être entraînée au moyen d'une manivelle (94), notamment à actionnement manuel.

9. Récolteuse selon la revendication 2 ou 3, **caractérisée** en ce que le dispositif de traitement du produit récolté (24) peut être déplacé au moyen d'un treuil, notamment un treuil à câble.

10. Récolteuse selon l'une quelconque des revendications précédentes, **caractérisée** en ce que le dispositif de traitement du produit récol-té (24) peut être fixé en position sur le carter (12) ou les glissières (78 L, 78 R) au moyen de butées (100 R, 100 L) et/ou de supports (102 L, 102 R).

11. Récolteuse selon la revendication 10, **caractérisée** en ce que les supports (102 L, 102 R) contiennent une vis (105 L, 105 R), qui peut être insérée dans des ouvertures de la glissière (78 L, 78 R) et du dispositif de traitement du produit récolté (24).

12. Récolteuse selon l'une quelconque des revendications précédentes, **caractérisée** en ce qu'un dispositif de raccordement (106) pour un appareil de levage est prévu sur le dispositif de traitement du produit récolté (24).

13. Récolteuse selon la revendication 12, **caractérisée** en ce que le dispositif de raccordement (106) se trouve à l'extrémité arrière du dispositif de traitement du produit récolté (24) et présente une goupille de retenue (108) s'étendant transversalement.
